# EUROPEAN PATENT APPLICATION

(11) **EP 4 309 999 A1**
(43) Date of publication of application: **24.01.2024**
(21) Application number: 22771266.8
(22) Date of filing: 10.03.2022
(51) Int. Cl.: B64C 13/18, B64C 13/20, B64C 27/08, B64C 39/02, B64D 47/08, G05D 1/10

(54) **FLIGHT CONTROL SYSTEM**

(30) Priority: 17.03.2021 JP 2021043625
(71) Applicant: RedDotDroneJapan Co.,Ltd., Osaka City, Osaka 599-0034 (JP)
(72) Inventor: MIURA, Nozomu, Osaka City, Osaka, 559-0034 (JP)
(74) Representative: Osterhoff, Utz
(86) International application number: PCT/JP2022/010554
(87) International publication number: WO 2022/196515

(57) **Abstract**

There is provided a flight control system that enables safe manual control of an aerial vehicle with no advanced control techniques required. A flight control system according to the present invention includes a controller device and an unmanned aerial vehicle, wherein the unmanned aerial vehicle includes: a driving mechanism that includes a plurality of rotary wings; a position estimation section that estimates a position of the unmanned aerial vehicle; an attitude estimation section that estimates an attitude of the unmanned aerial vehicle; a speed estimation section that estimates a moving speed of the unmanned aerial vehicle; and a flight control section that controls the driving mechanism based on information including a current position, a current attitude, and a current speed of the unmanned aerial vehicle, and the flight control section controls the driving mechanism in such a manner that the unmanned aerial vehicle flies along a virtual flight line that is set in advance in map data, based on a control signal that is transmitted from the controller device in accordance with an operation in a uniaxial direction on the operation input section by an operator.

## Description

### Technical Field

The present invention relates to a flight control system for an aerial vehicle.

### Background Art

Various services employing aerial vehicles including rotary-wing aircraft and unmanned aerial vehicles (UAVs) typified by drones used in various applications, such as image capturing from above, have been provided recently.

Examples of known methods for performing flight control of an aerial vehicle include a method in which the aerial vehicle is manually controlled with a controller device such as what is called a "puropo" (Japanese word for proportional control system), and a method for causing the aerial vehicle to fly autonomously according to a preset flight plan (see Patent Literature 1).

### Citation List

### Patent Literature

Patent Literature 1
Japanese Patent Laid-Open No. 2015-37937

### Summary of Invention

### Technical Problem

Manual control of an aerial vehicle with a controller device requires an operator to have advanced techniques, thus raising a problem in that a person with little experience in controlling an aerial vehicle cannot operate the controller device readily. In contrast, in the case where autonomous flight of an aerial vehicle is performed, the aerial vehicle only flies according to a flight plan. It is therefore difficult to dynamically change a flight speed and a flight direction of the aerial vehicle in accordance with various situations in the flight.

An object of the present invention is to provide a flight control system that enables safe manual control of an aerial vehicle with no advanced control techniques required.

### Solution to Problem

The present invention provides a flight control system including a controller device including an operation input section, and an unmanned aerial vehicle that is capable of being subjected to flight control based on a control signal from the controller device, wherein
the unmanned aerial vehicle includes:
a driving mechanism that includes a plurality of rotary wings;
a position estimation section that estimates a position of the unmanned aerial vehicle;
an attitude estimation section that estimates an attitude of the unmanned aerial vehicle;
a speed estimation section that estimates a moving speed of the unmanned aerial vehicle; and
a flight control section that controls the driving mechanism based on information including a current position, a current attitude, and a current speed of the unmanned aerial vehicle, and
the flight control section controls the driving mechanism in such a manner that the unmanned aerial vehicle flies along a virtual flight line that is set in advance in map data, based on a control signal that is transmitted from the controller device in accordance with an operation in a uniaxial direction on the operation input section by an operator.

### Advantageous Effect of Invention

According to the present invention, a flight control system that enables safe manual control of an aerial vehicle with no advanced control techniques required.

### Brief Description of Drawings

[Figure 1] Figure 1 is a diagram illustrating a configuration of a flight control system according to the present invention.
[Figure 2] Figure 2 is a functional block diagram illustrating a configuration of an aerial vehicle illustrated in Figure 1.
[Figure 3] Figure 3 is a functional block diagram illustrating a configuration of a controller device illustrated in Figure 1.
[Figure 4] Figure 4 is a plan view illustrating an example of a flight line.
[Figure 5] Figure 5 is a plan view illustrating another example of the flight line.
[Figure 6] Figure 6 is a plan view illustrating still another example of the flight line.

### Description of Embodiment

Contents of an embodiment of the present invention will be listed and described. A flight control system according to the embodiment of the present invention has the following configuration.

### [Item 1]

A flight control system including a controller device including an operation input section, and an unmanned aerial vehicle that is capable of being subjected to flight control based on a control signal from the controller device, wherein
the unmanned aerial vehicle includes:
   a driving mechanism that includes a plurality of rotary wings;
   a position estimation section that estimates a position of the unmanned aerial vehicle;
   an attitude estimation section that estimates an attitude of the unmanned aerial vehicle;
   a speed estimation section that estimates a moving speed of the unmanned aerial vehicle; and
   a flight control section that controls the driving mechanism based on a current position, a current attitude, and a current speed of the unmanned aerial vehicle, and
the flight control section controls the driving mechanism in such a manner that the unmanned aerial vehicle flies along a virtual flight line that is set in advance in map data, based on a control signal that is transmitted from the controller device in accordance with an operation in a uniaxial direction on the operation input section by an operator.

### [Item 2]

The flight control system according to Item 1, wherein the controller device or the unmanned aerial vehicle includes a flight line setting section that sets the flight line based on position information on two locations in the map data that correspond to both end portions of the flight line.

### [Item 3]

The flight control system according to Item 1 or 2, wherein
the unmanned aerial vehicle includes a direction estimation section that estimates a heading direction of the unmanned aerial vehicle, and
the flight control section controls the driving mechanism based on the heading direction that is a current heading direction.

### [Item 4]

The flight control system according to Item 3, wherein
the unmanned aerial vehicle includes:
an imaging section that is capable of capturing an image;
an image capturing direction estimation section that estimates an image capturing direction of the imaging section; and
an image capturing direction control section that changes the image capturing direction by controlling the heading direction of the unmanned aerial vehicle or a direction of a gimbal supporting the imaging section.

### [Item 5]

The flight control system according to any one of Items 1 to 4, wherein the flight line is entirely in a straight line shape.

### [Item 6]

The flight control system according to any one of Items 1 to 4, wherein the flight line has a bent portion or a curved portion.

### <Details of Embodiment According to Present Invention>

An embodiment of the present invention will be described below with reference to the drawings. It should be noted that the embodiment described below merely shows an example. Another known element or alternative means can be adopted in accordance with an application, an object, a scale, or the like of the embodiment.

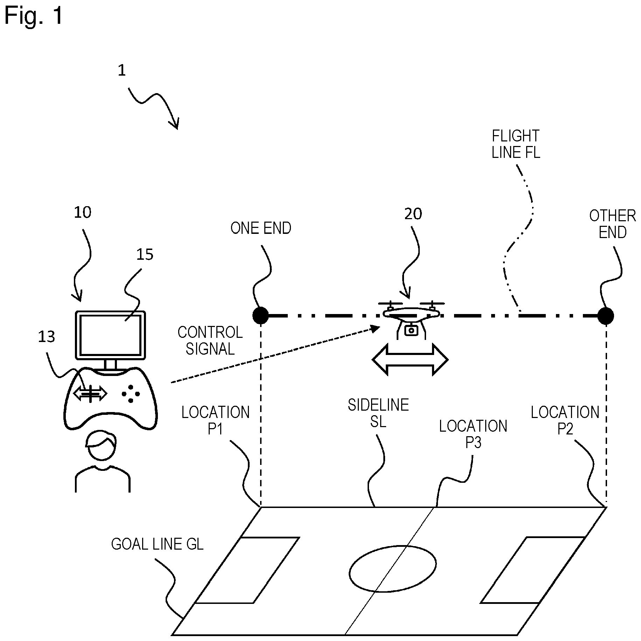

As illustrated in Figure 1, a system 1 according to the present invention includes a controller device 10 that is to be operated by an operator and an unmanned aerial vehicle 20 that is capable of flying based on control signals transmitted from the controller device 10. In the system 1, a manual control flight of the unmanned aerial vehicle 20 can be performed by the operator. By operating an operation input section 13 of the controller device 10 in a uniaxial direction, the operator can cause the unmanned aerial vehicle 20 to fly along a preset virtual flight line FL in the air. In the present embodiment, in addition to the configuration described above, a management terminal, a relay device, and the like that are connected to the controller device 10 and the unmanned aerial vehicle 20 through a network may be included.

### <Configuration of Controller Device>

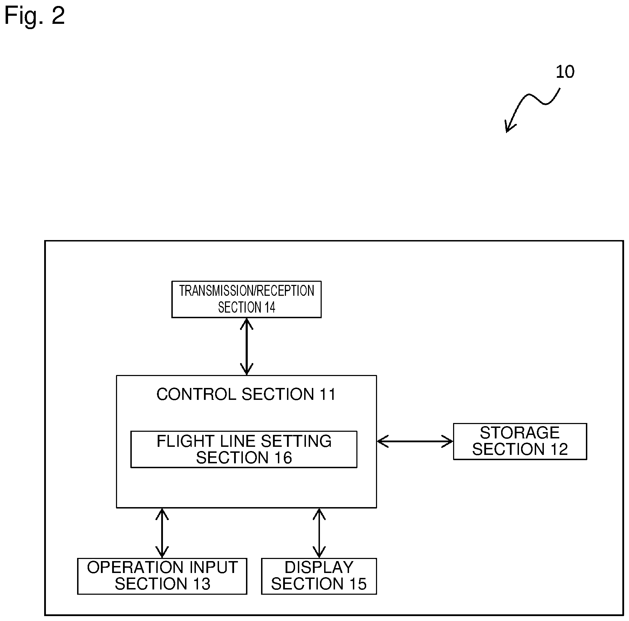

The controller device 10 includes functional blocks illustrated in Figure 2. The controller device 10 includes a control section 11, a storage section 12, the operation input section 13, a transmission/reception section 14, a display section 15, and a flight line setting section 16. Note that the functional blocks illustrated in Figure 2 form a reference configuration. The controller device 10 may include an additional constituting section (e.g., an operation section such as a button) other than the constituting sections described above.

The control section 11 includes, for example, a processor. The control section 11 performs signal processing (generation, output, transmission/reception) for overseeing and controlling activities of the sections of the controller device 10, input/output processing of data from/to the other sections, computational processing of data, and storage processing of data. The control section 11 can generate a control signal for controlling a flight of the unmanned aerial vehicle 20 while referring to information stored in the storage section 12 as appropriate, based on an operation on the operation input section 13 by the operator. The control section 11 can remotely control the unmanned aerial vehicle 20 by transmitting the control signal to the unmanned aerial vehicle 20 (via the transmission/reception section 14). Accordingly, the controller device 10 can remotely control movement of the unmanned aerial vehicle 20. The controller device 10 can transmit signals to change a flight direction, a flight speed, a flight acceleration, and the like to the unmanned aerial vehicle 20.

The storage section 12 may include, for example, a ROM that stores a program specifying activities of the controller device 10 and data on setting values and a RAM that temporarily saves various types of information and data to be used in processing by the control section 11. The storage section 12 may include a memory other than the ROM and the RAM. The storage section 12 may be provided inside the controller device 10 or may be provided to the controller device 10 in such a manner as to be detachable from the controller device 10. The storage section 12 can store information about the flight line FL.

The transmission/reception section 14 has a configuration integrating a transmission section that transmits a control signal based on an operation input, or the like, to the unmanned aerial vehicle 20 and a reception section that receives a signal from the unmanned aerial vehicle or the like. However, the transmission section and the reception section may be provided separately. The transmission/reception section 14 can use any suitable communication means such as wired communication and wireless communication. For example, the transmission/reception section 25 can use one or more of a local area network (LAN), a wide area network (WAN), infrared rays, radio, WiFi, a point-to-point (P2P) network, a telecommunication network, cloud communications, and the like. The transmission/reception section 25 may include a short-range wireless communication interface such as Bluetooth (R) and Bluetooth Low Energy (BLE).

The display section 15 displays various types of information obtained by the controller device 10 (e.g., images, flight data, etc., received from the unmanned aerial vehicle 20). The display section 15 may be provided inside or outside the controller device 10 or may be provided to the controller device 10 in such a manner as to be detachable from the controller device 10. The display section 15 may be configured with a touch panel capable of receiving various types of inputs.

The operation input section 13 receives an operation input by the operator. The operation input section 13 is configured to allow operation inputs in at least a uniaxial direction. The operation inputs in the uniaxial direction include an operation input toward one side from a neutral state and an operation input toward the other side, which is opposite to the one side, from the neutral state. The one side and the other side in the uniaxial direction of the operation input section 13 correspond to one side and the other side in a flight direction of the unmanned aerial vehicle 20 along the flight line FL, respectively.

The operation input section 13 is constituted by, but not limited particularly to, a control stick that can be operated in such a manner as to be tilted to the right or left, a pair of right and left push buttons (right and left buttons of a directional pad, and the like are included), a revolving dial, or the like. For example, in the case where the operation input section 13 is implemented as a control stick, operation inputs toward the one side and the other side in the uniaxial direction can be performed by tilting the control stick, from its neutral state in which the control stick is in an upright attitude, toward the one side and the other side in a right-left direction, respectively. Thus, control signals based on the operation inputs toward the one side and the other side in the uniaxial direction are transmitted from the transmission section (transmission/reception section 14) of the controller device 10 toward the unmanned aerial vehicle 20. Note that the uniaxial direction of the operation input section 13 can be set to, for example, but not limited particularly to, the right-left direction, a front-back direction, an up-down direction (push-pull direction), or the like.

An operable direction of the operation input section 13 is preferably limited to the uniaxial direction. However, the operable direction is not limited to the uniaxial direction. Operation inputs on the operation input section 13 in the present example are limited to those in the right-left direction. Therefore, operating the operation input section 13 is not complicated, which can facilitate manual control of the unmanned aerial vehicle 20.

The controller device 10 may include a flight start button or the like to submit a request to start a flight. When the flight start button is pressed, for example, the control section 11 of the controller device 10 refers to the storage section 12, outputs a control signal providing instructions for a flight to a prescribed position, and transmits the control signal to the unmanned aerial vehicle 20. Receiving the control signal, the unmanned aerial vehicle 20 that is placed on the ground at a standstill autonomously flies to a prescribed position in the air (at a prescribed latitude, longitude, and altitude) and hovers at the position.

A part of or the entire controller device 10 may be constituted by, for example, an information processing device including a touch-panel screen such as a smartphone and a tablet terminal. In this case, an image icon depicting a control stick or the like displayed on the screen of the touch panel constitutes the operation input section. By tapping the operation input section displayed on the screen (bringing a finger to come into contact with the screen) and by performing a slide on the operation input section (sliding a finger in any direction to move the finger while keeping the finger in contact with the screen), various types of operation inputs can be made.

When the operator performs a control operation such as tilting the operation input section 13 toward the one side or the other side in the uniaxial direction, the control section 11 of the controller device 10 outputs a control signal based on the operation input and transmits the control signal to the unmanned aerial vehicle 20. The control signal includes information about a direction (the one side or the other side) and information about a degree of the operation (an angle by which the control stick is tilted, a movement distance of an operation icon on the touch panel, etc.). Based on the information on the direction in the control signal, the flight direction of the unmanned aerial vehicle 20 is controlled. Based on the information about the degree of the operation in the control signal, the flight speed of the unmanned aerial vehicle 20 is controlled. That is, the controller device 10 can output a signal specifying the flight direction (horizontal moving direction) of the unmanned aerial vehicle 20 along the flight line FL and transmit the signal to the unmanned aerial vehicle 20. The controller device 10 in the present example can also transmit a signal specifying the flight speed of the unmanned aerial vehicle 20. The controller device 10 may be configured to output a control signal indicating instructions about a flight altitude of the unmanned aerial vehicle 20, instructions for a takeoff, instructions for a landing, instructions for hovering (stopping in the air), instructions for changing an orientation of a camera 26 (image capturing direction), instructions for changing an orientation of an aircraft body (heading direction), or the like and transmit the control signal to the unmanned aerial vehicle 20. The image capturing direction may be changed by controlling a gimbal 27 of the camera 26. The image capturing direction may be changed by changing the orientation of the aircraft body.

The transmission/reception section 14 can receive a signal from the unmanned aerial vehicle 20. Thus, for example, images captured with the camera 26 of the unmanned aerial vehicle 20, sounds obtained with a microphone, or the like can be displayed on the display section 15 (monitor, etc.) of the controller device 10 or output from a speaker.

The controller device 10 includes the flight line setting section 16 for setting the flight line FL. The flight line setting section 16 can set the flight line FL having any shape in map data stored in the storage section based on, for example, position information on two locations that correspond to both ends of the flight line FL and shape information on a line connecting the two locations. Based only on the position information on the two locations, the flight line setting section 16 can set a straight line (a segment) that connects the two points as the flight line FL. Shape information on a line that is not a straight line can be input by a user or the like drawing the line via an input section such as the touch panel. Specifically, the flight line setting section 16 can set the flight line FL based on information on a shape and a position of one line that is input (drawn, selected) by the operator or the like on a two-dimensional planar map displayed on the touch panel or the like.

The flight line setting section 16 may be provided in the unmanned aerial vehicle 20 or may be provided in the management terminal or the like connected to the controller device 10 and the unmanned aerial vehicle through the network. For example, the management terminal can exchange information with one or more unmanned aerial vehicles simultaneously, thus managing a flight of the one or more unmanned aerial vehicles. The management terminal is connected to, for example, a database. The management terminal may be implemented as, for example, a general-purpose computer such as a workstation and a personal computer or may be logically implemented by cloud computing. The management terminal includes, for example, a processor, a memory, a storage, a transmission/reception section, an input/output section, and the like, which are electrically connected to one another through a bus.

### <Configuration of Unmanned Aerial Vehicle>

The unmanned aerial vehicle (UAV) 20 in the present embodiment may be called an aerial vehicle, drone, a multi copter, remote piloted aircraft systems (RPAS), unmanned aircraft systems (UAS), or the like.

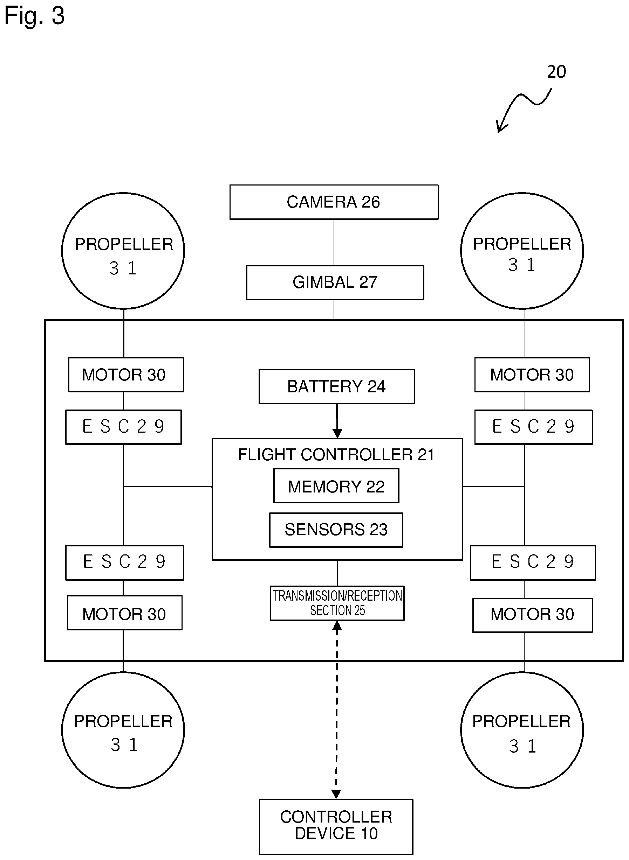

The unmanned aerial vehicle 20 includes functional blocks illustrated in Figure 3. Note that the functional blocks illustrated in Figure 3 form a reference configuration and can be changed as appropriate. The unmanned aerial vehicle 20 includes a flight controller 21 (flight control section), a memory 22 (storage section), sensors 23, a battery 24, a transmission/reception section 25, the camera 26 (imaging section), the gimbal 27, an ESC 29, motors 30, and propellers 31 (rotary wings). Note that the camera 26 may be fixed to a main body of the unmanned aerial vehicle 20 without the gimbal 27 provided. Providing the gimbal 27 enables the orientation of the camera 26 with respect to the main body of the unmanned aerial vehicle 20 to be changed.

The flight controller 21 is what is called a processing unit. The processing unit can include one or more processors such as a programmable processor (e.g., a central processing unit (CPU), an MPU, or a DSP). The processing unit is capable of accessing the memory 22. The memory 22 stores a piece of logic, a piece of code, and/or program instructions that can be executed by the processing unit for performing one or more steps. The memory 22 may include, for example, a separable medium such as an SD card and a random access memory (RAM), or an external storage device. Data obtained from the camera or the sensors 23 may be directly transferred to and stored in the memory 22. For example, data on still images/videos captured with the camera 26 or the like are recorded in an internal memory or an external memory.

The processing unit includes a control module configured to control a state of the unmanned aerial vehicle 20. For example, the control module controls a driving mechanism (the ESC 29, the motors 30, and the propellers 31) of the unmanned aerial vehicle 20 to adjust a spatial placement, a speed, and/or an acceleration of the unmanned aerial vehicle 20 with six degrees of freedom (translations x, y, and z, and rotations θₓ, θ_{y}, and θ_{z}). The control module can control one or more of status of installed components and the sensors 23. The flight controller 21 can control a flight of the unmanned aerial vehicle 20 based on a control signal from the controller device 10. The flight controller 21 can also control a flight of the unmanned aerial vehicle 20 based on map information that is stored in the storage section and includes two-dimensional or three-dimensional map data and based on current position information, current attitude information, current speed information, current acceleration information, and the like on the unmanned aerial vehicle 20. Based on the various types of information and a received control signal, the flight controller 21 can control the driving mechanism in such a manner that the unmanned aerial vehicle 20 flies toward the one side or the other side along the flight line FL. The flight controller 21 can also control the driving mechanism so that the unmanned aerial vehicle 20 moves along the flight line FL (the unmanned aerial vehicle 20 does not deviate from the flight line FL) irrespective of the heading direction of the unmanned aerial vehicle 20. In this case, the flight controller 21 obtains information on a current heading direction of the unmanned aerial vehicle 20 and controls the numbers of revolutions of the propellers 31 and the like based on the information on the heading direction. When the unmanned aerial vehicle 20 moves on the flight line FL, the flight controller 21 can also perform flight control in such a manner that the heading direction is always constant and unchanged.

The processing unit is capable of communicating with the transmission/reception section 25 that is configured to transmit and/or receive data to and/or from one or more external devices (e.g., a terminal, a display device, or another remote controller). The transmission/reception section 25 can use any suitable communication means such as wired communication and wireless communication. For example, the transmission/reception section 25 can use one or more of a local area network (LAN), a wide area network (WAN), infrared rays, radio, WiFi, a point-to-point (P2P) network, a telecommunication network, cloud communications, and the like. The transmission/reception section 25 may include a short-range wireless communication interface such as Bluetooth (R) and Bluetooth Low Energy (BLE). The transmission/reception section 25 can transmit and/or receive one or more of data obtained with the camera 26 or the sensors 23, a processing result generated by the processing unit, prescribed control data, a user command (control signal) from the controller device 10, the management terminal, or the like, and the like.

The sensors 23 according to the present embodiment can include an inertial sensor (acceleration sensor, gyroscope sensor), a GPS sensor, a proximity sensor (e.g., LIDAR), or a vision/image sensor (e.g., camera).

The unmanned aerial vehicle 20 includes a position estimation section for estimating the current position of the unmanned aerial vehicle 20. The position estimation section estimates the current position of the unmanned aerial vehicle 20 in the map data such as a two-dimensional planar map and a three-dimensional spatial map stored in the storage section such as the memory 22 based on coordinate information including a latitude and a longitude obtained from a global navigation satellite system (GNSS) such as the GPS, altitude information obtained from a barometric pressure sensor, and the like. Based on the current position of the unmanned aerial vehicle 20, the flight controller 21 can control the driving mechanism so that the unmanned aerial vehicle 20 stays on the flight line.

The unmanned aerial vehicle 20 includes an attitude estimation section that estimates the current attitude of the unmanned aerial vehicle 20. The attitude estimation section estimates the current attitude (inclination) of the unmanned aerial vehicle 20 based on information obtained from the inertial sensor or the like.

The unmanned aerial vehicle 20 includes a speed estimation section that estimates the current moving speed of the unmanned aerial vehicle 20. The speed estimation section estimates the speed based on, for example, data obtained from the inertial sensor.

The unmanned aerial vehicle 20 includes a direction estimation section that estimates the current orientation (heading direction) of the unmanned aerial vehicle 20. The direction estimation section estimates the heading direction based on, for example, bearing data obtained from a sensor such as a compass provided in the aircraft body (main body) of the unmanned aerial vehicle 20.

The unmanned aerial vehicle 20 includes an image capturing direction estimation section that estimates an image capturing direction of the imaging section. The image capturing direction estimation section estimates the image capturing direction based on, for example, bearing data obtained from the camera 26, the gimbal 27, or the sensor such as the compass provided in the aircraft body.

In the present embodiment, data obtained from the unmanned aerial vehicle 20 can include all possible types of data that can be obtained from the sensors included in the unmanned aerial vehicle 20, such as the position information (including the altitude information), the attitude information, the speed information, a battery level, a signal strength, image information from the camera, the direction of the camera (image capturing direction), and zoom in/zoom out. Flight information on the unmanned aerial vehicle 20 and the obtained data may be transmitted to the controller device 10 or may be transmitted to the management terminal via a relay device or the like as necessary. The controller device 10 can generate, based on an operation input by the operator, a signal providing instructions for starting/stopping image capturing with the camera, changing the direction of the camera (image capturing direction), the zoom in/zoom out, or the like and transmit the signal to the unmanned aerial vehicle 20.

### <Setting Flight Line>

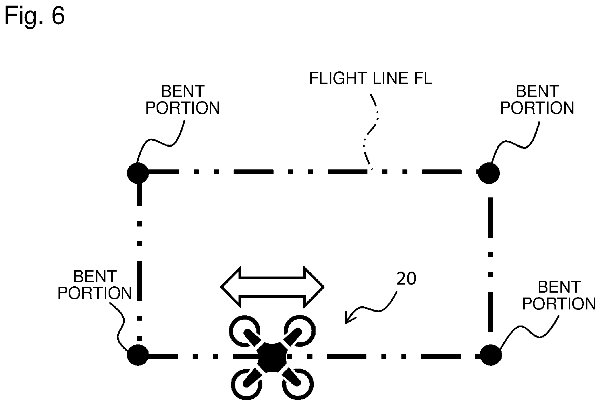

An example of a method for setting the flight line FL will be described below. Note that the method for setting the flight line FL is not limited to the present example. The flight line FL can be set by any method, using the controller device 10, the unmanned aerial vehicle 20, the management terminal connected through the network, or the like. The set flight line FL is stored in the storage section (12, 22, etc.) of the controller device 10, the unmanned aerial vehicle 20, or the management terminal connected through the network, or the like. The flight line FL means a linear flight area that is virtually set at a prescribed altitude in the air. The flight line FL is entirely constituted by a single continuous line. The flight line FL is preset before a flight of the unmanned aerial vehicle 20 is started. The flight line FL can have a configuration as a single linear line that continues from its one end to the other end (see Figure 1, Figure 4, and Figure 5) or can have a configuration as a closed shape constituted by a single line (see Figure 6).

Figure 1 illustrates a flight line FL that is set above one of sidelines SL of a court for sports such as soccer. The soccer court illustrated in Figure 1 is rectangular in plan view and has a pair of sidelines SL (touchlines) constituting its long sides and a pair of goal lines GL constituting its short sides.

For example, the flight line setting section 16 can obtain position information on two locations P1 and P2 that are positioned at both ends of the sideline SL and set the flight line FL based on the position information on the two locations P1 and P2. For example, the unmanned aerial vehicle 20 is placed at the location P1 that is one of both ends of the sideline SL (an intersection with the goal line GL). The flight line setting section 16 obtains information on a latitude and a longitude of the location P1 by the unmanned aerial vehicle 20 transmitting position information obtained from the GPS of the unmanned aerial vehicle 20 to the controller device 10. Similarly, the flight line setting section 16 obtains information on a latitude and a longitude of the location P2 that is the other end of the sideline SL. The flight line setting section 16 can set a straight line (a segment) that connects the two locations as a flight line FL on the two-dimensional planar map. Further, an altitude (altitude above ground level or altitude above sea level) of the flight line FL is preset. The altitude can be set to a prescribed altitude (e.g., 10 m, etc.) that is stored in the storage section 12 or the like. Alternatively, the flight line FL may be configured to be set to any altitude by the operator when the operator sets the flight line FL. The altitude of the entire flight line FL may be set to a certain altitude, or an altitude of part of the flight line FL may be set to be different from an altitude of the rest of the flight line FL.

In the case where the operator or the like sets the altitude of the flight line FL, for example, a numeric value (m) of the altitude may be input from the input section provided in the controller device 10, such as a touch panel, or may be selected and input from among preset choices of the altitude (e.g., 5 m, 10 m, 20 m, etc.).

The flight line FL is not limited to a line that is entirely a straight line as in the present example. The flight line FL may have a curved portion such as an arc shape or may have a bent portion at which the flight line FL is bent at a prescribed angle (an acute angle, the right angle, or an obtuse angle). Alternatively, the entire or a part of the flight line FL may be in any curved shape. The flight line setting section 16 can set the flight line FL based on input information on a start point (one end), an end point (the other end), a center of curvature, a curvature radius, a bending angle, position information on a corner portion (bent point), of the curved portion or the bent portion, and the like.

The flight line setting section 16 is also capable of setting the flight line FL based on information on one location corresponding to the one end of the flight line FL (coordinate information including its latitude and its longitude) and information on a distance (m) and a direction (bearing) from the one location to a location corresponding to the other end of the flight line FL.

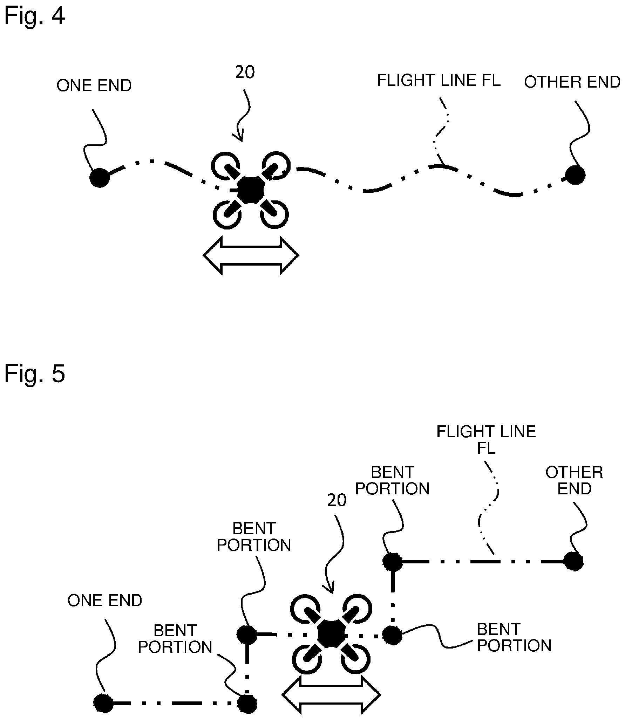

Here, Figure 4, Figure 5, and Figure 6 are plan views exemplifying the flight line FL. A flight line FL illustrated in Figure 4 has a configuration as a wavy line in which curves each having a substantially arc shape alternate from its one end to the other end. In the case illustrated in Figure 4, when the operator operates the operation input section 13 toward the one side or the other side in the uniaxial direction, the unmanned aerial vehicle 20 flies along the wavy flight line FL toward the one side (in a direction toward the one end) or the other side (in a direction toward the other end). When the operator does not operate the operation input section 13, the unmanned aerial vehicle 20 hovers on the flight line FL.

A flight line FL illustrated in Figure 5 includes four bent portions between its one end and the other end. The flight line setting section 16 can set the flight line FL based on, for example, position information on six locations corresponding to the one end, the other end, and the four bent portions and information on shapes of lines that connect the locations (in the present example, five straight lines). In the case illustrated in Figure 5, the unmanned aerial vehicle 20 also moves along the bent flight line FL toward the one side or the other side, as in the case illustrated in Figure 4.

A flight line FL illustrated in Figure 6 has a quadrilateral shape including four bent portions. The flight line setting section 16 can set the flight line FL based on, for example, position information on four locations corresponding to the four bent portions and information on shapes of lines that connect the locations (in the present example, four straight lines). In the case illustrated in Figure 6, the unmanned aerial vehicle 20 also moves along the closed-shaped flight line FL toward the one side or the other side to make a circuit. Note that the closed-shaped flight line FL is not limited to a rectangular configuration in plan view. The closed-shaped flight line may have a square shape or another polygonal shape or may have a circular shape, an elliptic shape, or the like. In the case where the flight line FL has a circular shape, the flight line FL can be set based on, for example, position information on a center of the circle and information on a radius (diameter) of the circle. In the case where the flight line FL has an elliptic shape, the flight line FL can be set based on, for example, position information on a center of the ellipse and information on a major axis and a minor axis of the ellipse.

The flight line FL is transmitted to the storage section 12 of the controller device 10 and/or the unmanned aerial vehicle 20 and stored in the memory 22 of the unmanned aerial vehicle 20. The flight controller 21 of the unmanned aerial vehicle 20 can control the driving mechanism such as the propellers 31 based on information on the flight line FL in the map data such as the two-dimensional map and the three-dimensional map and information on the current position, attitude, and speed of the unmanned aerial vehicle so that the unmanned aerial vehicle 20 stays on the flight line FL. The flight controller 21 may be further configured to control the driving mechanism based on information on the heading direction and acceleration of the unmanned aerial vehicle 20.

### <Control Example 1 >

An example of flight control according to the present embodiment will be described below with reference to Figure 1. In the present example, a case where images/videos of a game of soccer or the like are captured with the camera 26 of the unmanned aerial vehicle 20 will be described. A flight line FL is preset by the method described above or the like before the flight is started.

For example, with the unmanned aerial vehicle 20 placed on the ground, an operator selects and inputs an auto-floating button or the like of the controller device 10. This causes a signal providing instructions for auto-floating to the flight line FL to be transmitted from the controller device 10 to the unmanned aerial vehicle 20. Receiving the signal, the unmanned aerial vehicle 20 automatically floats to the preset altitude and hovers on the flight line FL by the flight controller 21 controlling the driving mechanism. When the unmanned aerial vehicle 20 is placed on the ground, it is preferable to place the unmanned aerial vehicle 20 on a line on the ground corresponding to the flight line FL (the sideline SL in the present example). Such a placement allows the unmanned aerial vehicle 20 to move to the flight line FL only by causing the unmanned aerial vehicle 20 to float straight up. For example, in the case where the auto-floating button is selected and input with the unmanned aerial vehicle 20 being placed at a middle point P3 between the location P1 and the location P2 in Figure 1, the unmanned aerial vehicle 20 hovers at a center position of the flight line FL directly above the middle point P3.

The operator can control a moving direction, a moving speed, and the like of the unmanned aerial vehicle 20 along the flight line FL by making an operation input in the uniaxial direction (right-left direction, etc.) on the operation input section 13. The operator may control the unmanned aerial vehicle 20 while visually checking the unmanned aerial vehicle 20 or may perform a control operation while watching an image displayed on a monitor screen or the like of the controller device 10 (a real-time picture captured with the camera 26 of the unmanned aerial vehicle 20).

When the operator makes an operation input toward the one side in the uniaxial direction by operating the operation input section 13 of the controller device 10, the unmanned aerial vehicle 20 moves (e.g., flies horizontally) toward the one side along the flight line FL, and when the operator makes an operation input toward the other side in the uniaxial direction, the unmanned aerial vehicle 20 moves toward the other side along the flight line FL. The one side and the other side of the operation input section 13 in the uniaxial direction correspond to one side and the other side along the flight line FL, respectively. For example, in the case where the uniaxial direction of the operation input section 13 is the right-left direction, when the operation input section 13 is operated to be tilted toward the left side, the unmanned aerial vehicle 20 moves toward the one side along the flight line FL, and when the operation input section 13 is operated to be tilted toward the right side, the unmanned aerial vehicle 20 moves toward the other side along the flight line FL.

While the operator makes an operation input toward the one side on the operation input section 13 of the controller device 10, the unmanned aerial vehicle 20 continues moving toward the one end along the flight line FL based on control signals from the controller device 10. However, once the unmanned aerial vehicle 20 reaches the one end of the flight line FL, the unmanned aerial vehicle 20 does not continue moving any more and hovers at a position of the one end even when the operator makes an operation input toward the one side on the operation input section 13 of the controller device 10. That is, the unmanned aerial vehicle 20 is subjected to flight control such that the unmanned aerial vehicle 20 stays on the flight line FL. This holds true in the case where the operator makes an operation input toward the other side on the operation input section 13 of the controller device 10. The unmanned aerial vehicle 20 moves toward the other end along the flight line FL until reaching the other end of the flight line FL, and once the unmanned aerial vehicle 20 reaches the other end, the unmanned aerial vehicle 20 does not move any more and hovers. As seen from the above, the unmanned aerial vehicle 20 can be subjected to flight control such that the unmanned aerial vehicle 20 automatically stays on a preset flight line FL, with a manual control with the controller device 10 that is simply implemented.

As seen from the above, an operator can adjust the position of the unmanned aerial vehicle 20 on the flight line FL easily only with an operation in the uniaxial direction on the operation input section 13. As a result, even an operator with no experience in controlling the unmanned aerial vehicle 20 can capture images/videos of a soccer game or the like easily using the camera 26 of the unmanned aerial vehicle 20. For example, in the case where image capturing is performed with the unmanned aerial vehicle 20, images of an image capturing target can be captured appropriately by adjusting the position of the unmanned aerial vehicle 20 on the flight line FL in accordance with a position of a person or an object that is the image capturing target. Further, since the unmanned aerial vehicle 20 is subjected to flight control by the flight controller 21 of the unmanned aerial vehicle 20 such that the unmanned aerial vehicle 20 automatically stays on the flight line FL, there is no risk that the unmanned aerial vehicle 20 flies in an unintended direction by a misoperation by an operator or the like, thus enabling significant enhancement of safety. Accordingly, the system 1 enables safe manual control of an aerial vehicle with no advanced control techniques required.

The unmanned aerial vehicle 20 may include the image capturing direction estimation section that estimates the image capturing direction of the imaging section and an image capturing direction control section for controlling the image capturing direction. The image capturing direction estimation section estimates the image capturing direction based on, for example, information on at least any one of the heading direction of the unmanned aerial vehicle 20, information about an orientation of the gimbal 27, a picture captured with the camera 26, and the like. The image capturing direction control section can control the image capturing direction by control of the gimbal 27 supporting the camera 26, control of the heading direction of the unmanned aerial vehicle 20, and/or the like. Such a configuration can increase an accuracy of capturing of an image capturing target with the imaging section.

The flight control method for the unmanned aerial vehicle 20 according to the present invention includes a flight line setting step of setting, by the flight line setting section 16, a virtual flight line in map data, and a flight controlling step of controlling, by the flight control section 21, the unmanned aerial vehicle in such a manner that the unmanned aerial vehicle flies along the flight line based on a control signal transmitted from the controller device 10 in accordance with an operation in the uniaxial direction on the operation input section 13 by an operator.

The present embodiment described above is merely an exemplification for facilitating understanding of the present invention and is not intended to be construed as limiting the present invention. Naturally, the present invention can be modified and improved without departing from the gist thereof, and equivalents of the modification and improvement are included in the present invention.

For example, some of the functions of the controller device 10 may be carried out by the unmanned aerial vehicle 20, and some of the functions of the unmanned aerial vehicle 20 may be carried out by the controller device 10.

The controller device 10 may include a switch for switching between a specific control mode in which the unmanned aerial vehicle 20 is subjected to flight control such that the unmanned aerial vehicle 20 only moves along the flight line FL and a normal mode in which a flight of the unmanned aerial vehicle 20 is not limited to the movement along the flight line FL. In this case, the control section 11 of the controller device 10 and/or the flight controller 21 of the unmanned aerial vehicle 20 is provided with a mode switch section for switching between the specific control mode and the normal mode. When the specific control mode is switched to by the mode switch section, a movement area of the unmanned aerial vehicle 20 is limited to only the flight line FL as described above. For example, during the specific control mode, operation inputs on the controller device 10 may be limited only to operation inputs in the uniaxial direction, or control signals transmitted from the controller device 10 to the unmanned aerial vehicle 20 may be limited to control signals in the uniaxial direction. During the normal mode, the limit is eliminated, enabling operation inputs with the operation input section 13 of the controller device 10 in directions of a plurality of axes and enabling control signals in the directions of the plurality of axes to be transmitted from the controller device 10 to the unmanned aerial vehicle 20. With such a configuration, for example, in the case where an operator with rich experience in controlling the unmanned aerial vehicle 20 uses the system, the normal mode is switched to, enabling the operator to perform manual control of the unmanned aerial vehicle 20 freely irrespective of the flight line FL. In the case where an operator with little experience in controlling the unmanned aerial vehicle 20 uses the system, by switching to the specific control mode, manual control with only movement along the flight line FL can be performed easily and safely.

### Reference Signs List

10 controller device
20 unmanned aerial vehicle
21 flight control section

## Claims

1. A flight control system comprising a controller device including an operation input section, and an unmanned aerial vehicle that is capable of being subjected to flight control based on a control signal from the controller device, wherein
the unmanned aerial vehicle includes:
a driving mechanism that includes a plurality of rotary wings;
a position estimation section that estimates a position of the unmanned aerial vehicle;
an attitude estimation section that estimates an attitude of the unmanned aerial vehicle;
a speed estimation section that estimates a moving speed of the unmanned aerial vehicle; and
a flight control section that controls the driving mechanism based on information including a current position, a current attitude, and a current speed of the unmanned aerial vehicle, and
the flight control section controls the driving mechanism in such a manner that the unmanned aerial vehicle flies along a virtual flight line that is set in advance in map data, based on a control signal that is transmitted from the controller device in accordance with an operation in a uniaxial direction on the operation input section by an operator.

2. The flight control system according to claim 1, wherein the controller device or the unmanned aerial vehicle includes a flight line setting section that sets the flight line based on position information on two locations in the map data that correspond to both end portions of the flight line.

3. The flight control system according to claim 1 or 2, wherein
the unmanned aerial vehicle includes a direction estimation section that estimates a heading direction of the unmanned aerial vehicle, and
the flight control section controls the driving mechanism based on the heading direction that is a current heading direction.

4. The flight control system according to claim 3, wherein
the unmanned aerial vehicle includes:
an imaging section that is capable of capturing an image;
an image capturing direction estimation section that estimates an image capturing direction of the imaging section; and
an image capturing direction control section that changes the image capturing direction by controlling the heading direction of the unmanned aerial vehicle or a direction of a gimbal supporting the imaging section.

5. The flight control system according to any one of claims 1 to 4, wherein the flight line is entirely in a straight line shape.

6. The flight control system according to any one of claims 1 to 4, wherein the flight line has a bent portion or a curved portion.
